# EUROPEAN PATENT APPLICATION

(11) **EP 1 249 960 A2**
(43) Date of publication of application: **16.10.2002**
(21) Application number: 02008417.4
(22) Date of filing: 12.04.2002
(51) Int. Cl.: H04L 5/06

(54) **Time-multiplexed multi-carrier transmitter**

(30) Priority: 12.04.2001 US 833367
(71) Applicant: TRW Inc., Redondo Beach, California 90278 (US)
(72) Inventor: Claxton, Shimen K., Encino, CA 91436 (US); Fong, Flavia S., Alhmbra, CA 91803 (US); Kintis, Mark (NMI), Manhattan Beach, CA 90266 (US); Martin, Donald R., Redondo Beach, CA 90277 (US); Upton, Eric L., Unit 302 Bellevue, Washington 98004 (US); Smith, Andrew D., Redondo Beach, CA 90278 (US); Wong, Brian P., Rancho Palos Verdes, CA 90275 (US)
(74) Representative: Schmidt, Steffen J., Dipl.-Ing.

(57) **Abstract**

A time multiplexed multiple carrier transmitter includes a first data encoder that produces first transmit data and a second data encoder that produces second transmit data. In addition, the transmitter includes a digital multiplexer coupled to the first and the second data encoders. The digital multiplexer provides a transmit signal output. A transmit frequency upconverter coupled to a power amplifier and the transmit signal output provides a final upconversion (or direct upconversion) to a transmit frequency for each channel. The transmitter also includes a multiplexer control circuit coupled to the digital multiplexer through a multiplexer control input. The multiplexer control circuit produces a multiplexer control signal on the multiplex control input that selects between the first and second data encoders according to a transmit schedule. The transmit schedule determines when, at the frequency at which, the transmitter selects and transmits data from each data encoder.

## Description

### BACKGROUND OF THE INVENTION

The present invention relates to communication systems. In particular, the present invention relates to time-multiplexed wireless communication systems.

Driven by the ever increasing demand for communication capacity, the communication industry has moved in the direction of providing multiple simultaneous transmit channels per antenna. In other words, several channels, separated in frequency, are modulated with information content, summed together, and presented for transmission at the same time. Although such an approach is viable in theory, substantial difficulties arise from its practical application.

In particular, the output amplifier (responsible for ultimately driving the antenna) becomes a limiting factor. Ideally, the output amplifier is extremely linear over a wide range of minimum to maximum power output, for multiple channels, to prevent artifacts such as intermodulation distortion. Such artifacts are, in fact, regulated by the FCC to prevent the introduction of interference in neighboring communication channels.

However, designing and building a suitable output amplifier that is capable of linear operation over the desired range presents a substantial challenge that typically results in an extremely complex, expensive, and inefficient output amplifier. As a result, the output amplifier can become the key cost driver for a proposed multi-carrier communication system. Nevertheless, such an output amplifier is required to allow the communication system to transmit multiple carriers simultaneously with a minimum of transmitted power outside the multiple channels or interference between the transmitted channels.

A need has long existed in the industry for a communication system that addresses the problems noted above and others previously experienced.

### BRIEF SUMMARY OF THE INVENTION

A preferred embodiment of the present invention provides a time multiplexed multiple-carrier transmitter. The transmitter includes a first data encoder that produces first transmit data and a second data encoder that produces second transmit data. The first and second transmit data may be unencoded data bits, or may include block coded or convolutionally coded data, for example, optionally frequency or phase modulated and upconverted to preselected independent intermediate frequencies (IF).

In addition, the transmitter includes a digital multiplexer coupled to the first and the second data encoders. The digital multiplexer provides a transmit signal output. A transmit frequency upconverter coupled to a power amplifier and the transmit signal output provides a final upconversion (or direct upconversion) to a transmit frequency for each channel.

The transmitter also includes a multiplexer control circuit coupled to the digital multiplexer through a multiplexer control input. The multiplexer control circuit produces a multiplexer control signal on the multiplex control input that selects between the first and second data encoders according to a transmit schedule. The transmit schedule determines when the transmitter selects and transmits data from each data encoder. The transmit schedule may also, for example, emphasize or de-emphasize transmission of data from a particular data encoder to deliver a target power to a receiver.

A digital to analog converter may be included between the transmit frequency upconverter and the power amplifier, or between the digital multiplexer and the frequency upconverter, as examples. In addition, the transmitter may include additional data encoders coupled to the digital multiplexer. As an example, four frequency independent data encoders may be connected to the digital multiplexer, and selected with a two-bit multiplexer control signal.

Another preferred embodiment of the present invention provides a method for time multiplexed multiple carrier transmission. In summary, the method includes applying first transmit data from a first data encoder to a digital multiplexer, applying second transmit data from a second data encoder to the digital multiplexer, and generating a multiplexer control signal according to a predetermined transmit schedule. The method also includes digitally multiplexing between the first and second transmit data under control of the multiplexer control signal to generate a transmit signal, frequency upconverting the transmit signal to provide an upconverted transmit signal, and power amplifying the transmit signal for transmission.

Another preferred embodiment of the present invention provides a time multiplexed multi-carrier signal selector. The signal selector includes a first transmit data input, a second transmit data input, and a digital multiplexer coupled to the first and the second transmit data inputs. The digital multiplexer includes a transmit signal output and a multiplexer control input. A transmit frequency upconverter (including a transmit frequency control input) is provided and coupled between the transmit signal output and the power amplifier.

In addition, a multiplexer control circuit connects to the multiplexer control input, the transmit frequency control input, and an IF control input. In operation, the multiplexer control circuit is coordinated by a transmit schedule to assert an IF selection signal, an upconverter frequency selection signal and a multiplexer control signal for transmitting data on each of the first and second transmit data inputs (or additional transmit data inputs) at preselected frequencies.

### BRIEF DESCRIPTION OF THE DRAWINGS

Figure 1 illustrates a time-multiplexed multi-carrier transmitter.

Figure 2 shows a flow diagram for time-multiplexed multi-carrier transmission.

### DETAILED DESCRIPTION OF THE INVENTION

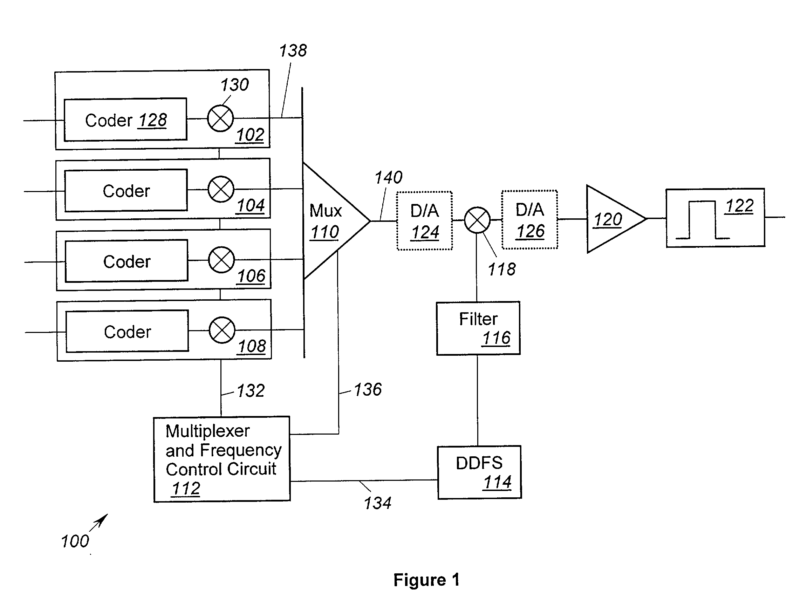

Turning now to Figure 1, that figure illustrates a time-multiplexed multi-carrier transmitter 100. The transmitter 100 includes data encoders 102, 104, 106, and 108, a digital multiplexer 110, and a multiplexer and frequency control circuit 112. The transmitter 100 also includes a direct digital frequency synthesizer (DDFS) 114, a filter 116, and a transmit frequency upconverter 118. Also shown are a power amplifier 120, and a bandpass filter 122. Optional positions at which a Digital to Analog converter may be located are indicated at 124 and 126. The data encoders 102-108 may include, for example, coding circuits (e.g., the coding circuit 128) and IF upconverters (e.g., the IF upconverter 130).

Signal connections of interest in Figure 1 include the IF control input 132 (that carries an IF selection signal), the transmit frequency control input 134 (that carriers a transmit frequency selection signal), and the multiplexer control input 136 (that carries a multiplexer channel selection signal). Additionally, a transmit data input (carrying data to be transmitted) is indicated at 138, and a transmit signal output is labeled 140. The connections 132-140 may be, for example, multiple bit data paths.

Although coding is not required, the coding circuit 128 may nonetheless provide, for example, block, convolutional, or concatenated coding with or without interleaving, phase, amplitude, or frequency modulation, and the like. The IF upconverter 130 optionally provides conversion to a first IF using, for example, a digital multiplier with a preset frequency, or a frequency selected by the IF control input 132. When the IF upconverter 130 is not used, the transmit frequency upconverter 118 may instead provide direct upconversion to a final transmit frequency. To that end, the transmit frequency control input 134 provides an appropriate transmit frequency selection signal to the frequency source (the DDFS 114). The transmit frequency upconverter 118, filter 116, and DDFS 114 may be implemented in digital form, or may be implemented with analog circuit components. Exemplary frequencies of operation place transmit channels in the 1.812 GHz range, with 200-600 KHz channel spacing and 200 KHz bandwidth.

Note that the D/A converters 124 and 126 may be inserted at either location indicated. Preferably, however, the D/A converter 124 is used to convert the slower frequency content on the transmit signal output 140 before final upconversion. The power amplifier 120 then provides amplification for signal transmission, after bandpass filtering by the bandpass filter 122. The multiplexing process inherently creates switching artifacts, which manifest as out-of-band power. The artifacts are readily filtered by the final bandpass filter 122.

Note that because the digital multiplexer 110 selects one transmit data input at a time, the transmit signal contains frequency content from a single channel at a time. Because the power amplifier 120 need not handle the extreme input swings that tend to be generated by transmitting multiple channels simultaneously, the power amplifier 120 may be implemented in a much less complex, less inefficient, and less expensive (to build and operate) manner. Thus, rather than only being 5-7% efficient, the power amplifier 120 may instead be 30% or more efficient.

A receiver may reconstruct the transmitted signal without loss of information provided that the digital multiplexer 110 rapidly revisits each transmit data input. In particular, the digital multiplexer 110 preferably revisits each transmit data input at at least twice the bandwidth of the signal to be transmitted.
However, the digital multiplexer may revisit much faster, for example (for the frequencies noted above), at a 25MHz rate (i.e., switching between one of four transmit data inputs at 100MHz) and dwelling for a time period of one transmit data signal sample.

In addition, the digital multiplexer 110 may switch between transmit data inputs in a uniform or non-uniform manner. Thus, the digital multiplexer may dwell for longer or shorter time periods on preselected transmit data inputs, and switch between the transmit data inputs in any order. As an example, dwelling for shorter (or longer) periods of time on a transmit data input may be used to reduce (or increase) the amount of power delivered to a receiver to meet a target delivered power for cellular communications. In general, the multiplexer control circuit 112 operates under control of an implicit or explicit transmit schedule.

The transmit schedule generally determines which transmit data input passes through the digital multiplexer 110, the IF (if any), and the transmit frequency at any instant in time. Although the transmit schedule may be stored, preprogrammed, or built into the multiplexer control circuitry 112 in many forms, the transmit schedule may be envisioned in table form, such as that shown in Table 1. Note that if the IF upconverters in the data encoders 102-108 are used, then the transmit frequency selection input 134 provides a signal indicative of the frequency necessary for final frequency upconversion, taking into consideration the IF.

**Table 1**

| Time Period | Signal Selection |
|---|---|
| 0 | encoder 102 IF - 100KHz Transmit - 1.812 GHz |
| 1 | encoder 102 IF - 100KHz Transmit - 1.812 GHz |
| 2 | encoder 104 IF - 300KHz Transmit - 1.813 GHz |
| 3 | encoder 106 IF - 500KHz Transmit - 1.814 GHz |
| 4 | encoder 108 IF - 700KHz Transmit - 1.815 GHz |
| 5 | encoder 108 IF - 700KHz Transmit - 1.815 GHz |
| 6 | encoder 108 IF - 700KHz Transmit - 1.815 GHz |
| 7 | encoder 106 IF - 500KHz Transmit - 1.814 GHz |
| 8 | encoder 106 IF - 500KHz Transmit - 1.814 GHz |
| 9 | encoder 104 IF - 300KHz Transmit - 1.813 GHz |
| Repeat | |
| | |

Thus, under operation of the transmit schedule, the multiplexer control circuit 112, digital multiplexer 110, and the transmit data inputs provide a time-multiplexed multi-carrier signal selector.

The circuitry shown in Figure 1 may be implemented in many ways. Thus, for example, a single ASIC may incorporate, in digital form, the encoders 102-108, multiplexer control circuit 112, digital multiplexer 110, DDFS 114, filter 116, and transmit frequency upconverter 118 (when the D/A converter 126 is used). As another example, a DSP or Processor operating under general program control may be used. Alternatively, discrete circuits may instead be used. For example, when the D/A converter 124 is used, the transmit frequency upconverter 118 may be an analog multiplier.

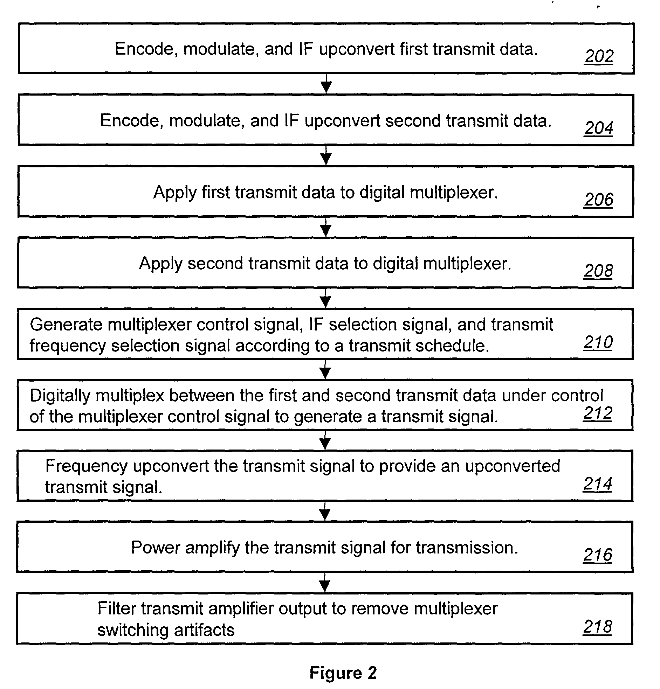

Turning next to Figure 2, that figure illustrates a flow diagram 200 of the operation of the transmitter 100. Initially, first and second transmit data is encoded, modulated, and upconverted 202-204. The resultant transmit data is then applied 206-208 to the inputs of the digital multiplexer 110. The multiplexer control circuit 110 generates 210 a multiplexer control signal, IF selection signal, and transmit frequency selection signal according to a transmit schedule as noted above.

The digital multiplexer 110 then multiplexes 212 between the first and second transmit data under control of the multiplexer control signal to generate a transmit signal on the transmit signal output 140. Next, the transmitter 100 provides transmit frequency upconversion 214 to a final transmit frequency. Subsequently, the transmitter 100 power amplifies the transmit signal for transmission.

Thus, the present invention provides a time-multiplexed multi-carrier transmitter. The transmitter includes a signal selector that digitally multiplexes between several transmit data inputs to generate single channel frequency content on a transmit signal output. As a result, the downstream power amplifier may be much more efficient and cost effective, and much less bulky and complex.

While the invention has been described with reference to a preferred embodiment, those skilled in the art will understand that various changes may be made and equivalents may be substituted without departing from the scope of the invention. In addition, many modifications may be made to adapt a particular step, structure, or material to the teachings of the invention without departing from its scope. Therefore, it is intended that the invention not be limited to the particular embodiment disclosed, but that the invention will include all embodiments falling within the scope of the appended claims.

## Claims

1. A time multiplexed multiple carrier transmitter comprising:
a first data encoder for producing first transmit data;
a second data encoder for producing second transmit data;
a digital multiplexer coupled to the first and the second data encoder, the digital multiplexer including a transmit signal output;
a power amplifier;
a transmit frequency upconverter coupled between the transmit signal output and the power amplifier; and
a multiplexer control circuit coupled to the digital multiplexer through a multiplexer control input, the multiplexer control circuit producing a multiplexer control signal on the multiplex control input to select between the first and second data encoders according to a predetermined transmit schedule.

2. The time multiplexed multiple carrier transmitter of claim 1, wherein the predetermined transmit schedule selects the first data encoder more frequently than the second data encoder to deliver a predetermined target power.

3. The time multiplexed multiple carrier transmitter of claim 1, further comprising a digital to analog converter coupled between the transmit frequency upconverter and the power amplifier.

4. The time multiplexed multiple carrier transmitter of claim 1, further comprising a digital to analog converter coupled between the digital multiplexer and the transmit frequency upconverter.

5. The time multiplexed multiple carrier transmitter of claim 1, wherein at least one of the first data encoder and second data encoder includes a first intermediate frequency upconverter.

6. The time multiplexed multiple carrier transmitter of claim 1, further comprising a third data encoder for producing third transmit data, the third data encoder coupled to the digital multiplexer, and the multiplexer control signal selecting one of the first, second, and third data encoders according to the predetermined transmit schedule.

7. The time multiplexed multiple carrier transmitter of claim 6, further comprising a fourth data encoder for producing fourth transmit data, the fourth data encoder coupled to the digital multiplexer, and the multiplexer control signal selecting one of the first, second, third, and fourth data encoders according to the predetermined transmit schedule.

8. The time multiplexed multiple carrier transmitter of claim 1, further comprising a frequency source coupled to the multiplexer control circuit through a frequency control input and to the transmit frequency upconverter.

9. The time multiplexed multiple carrier transmitter of claim 8, wherein the multiplexer control circuit produces a frequency selection signal on the frequency control input, coordinated with the multiplexer control signal to select a predetermined transmit frequency for each of the first and second transmit data.
